# EUROPÄISCHE PATENTSCHRIFT

(11) **EP 1 658 715 B1**
(45) Veröffentlichungstag und Bekanntmachung des Hinweises auf die Patenterteilung: **22.04.2009**
(21) Anmeldenummer: 04766568.2
(22) Anmeldetag: 20.08.2004
(51) Int. Cl.: H04L 29/08

(54) **VORRICHTUNG UND VERFAHREN ZUM CLUSTERN EINER MEHRZAHL AN TEILNEHMERN IN EINEM MOBILEN NETZWERK**
DEVICE AND METHOD FOR CLUSTERING A PLURALITY OF USERS IN A MOBILE NETWORK
DISPOSITIF ET PROCEDE PERMETTANT DE GROUPER UNE PLURALITE D'ABONNES D'UN RESEAU MOBILE

(30) Priorität: 25.08.2003 DE 10339035
(43) Veröffentlichungstag der Anmeldung: 24.05.2006
(73) Patentinhaber: SIEMENS AKTIENGESELLSCHAFT, 80333 München (DE)
(72) Erfinder: BERGER, Michael, 85635 Höhenkirchen (DE); SEITZ, Christian, 81379 München (DE)
(86) Internationale Anmeldenummer: PCT/EP2004/051870
(87) Internationale Veröffentlichungsnummer: WO 2005/022868

(56) Entgegenhaltungen:
- WO-A-03/055149
- TSENG Y-C ET AL: "LOCATION AWARENESS IN AD HOC WIRELESS MOBILE NETWORKS" COMPUTER, IEEE COMPUTER SOCIETY, LONG BEACH., CA, US, US, Bd. 34, Nr. 6, Juni 2001 (2001-06), Seiten 46-52, XP001103949 ISSN: 0018-9162
- FABINA GARCIA NOCETTI, JULIO SOLANO GONZALEZ, IVAN STOJMENOVIC: "Connectivity Based k-hop Clustering in Wirless Networks" TELECOMMUNICATIONS SYSTEMS, [Online] Mai 2003 (2003-05), Seiten 205-220, XP002311117 NETHERLANDS Gefunden im Internet: <URL:http://www.site.uottawa.ca/~ivan/GSS- TS.pdf> [gefunden am 2004-12-15]
- YUANZHU PETER CHEN, ARTHUR L. LIESTMAN: "A Zonal Algorithm for Clustering Ad Hoc Networks" INTERNATIONAL JOURNAL OF FOUNDATIONS OF COMPUTER SCIENCE, [Online] April 2003 (2003-04), Seiten 1-18, XP002311118 Gefunden im Internet: <URL:http://citeseer.ist.psu.edu/cache/pap ers/cs/27797/http:zSzzSzwww.cs.sfu.cazSz~y zchenzSzpersonalzSz.zSzpaperszSzijfcs03.pd f/chen03zonal.pdf> [gefunden am 2004-12-15]
- CHANG WOOK AHN ET AL: "Efficient clustering-based routing protocol in mobile ad-hoc networks" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, Bd. VOL. 1 OF 4. CONF. 56, 24. September 2002 (2002-09-24), Seiten 1647-1648, XP010608708 ISBN: 0-7803-7467-3

## Beschreibung

Die Anmeldung betrifft ein Verfahren zum Clustern einer Mehrzahl an Teilnehmern in einem mobilen Netzwerk, wobei jedem Teilnehmer ein spezifisches Profil mit Daten über ihn zugeordnet ist. Die Anmeldung betrifft weiterhin eine Einrichtung zum Clustern einer Mehrzahl von Teilnehmern in mobilen Netzwerken. Weiter betrifft die Anmeldung ein entsprechendes Computerprogramm mit Programmcode-Mitteln und ein entsprechendes Computerprogramm-Produkt zum Clustern einer Mehrzahl an Teilnehmern in einem mobilen Netzwerk.

Bei dem Teilnehmer kann es sich beispielsweise um eine Person, die mit einem Endgerät, wie z.B. einem Mobilfunktelefon, einem Pocket-PC (PDA), einem Tablet-PC oder ähnlichem, versehen ist oder auch um ein Fahrzeug, wie beispielsweise einem schienengebundenen Kabinenfahrzeug, handeln.

Das jedem Teilnehmer zugeordnete Profil beinhaltet Daten über den Teilnehmer. Es kann sich hierbei um persönliche und/oder geschäftliche Daten, um Adressdaten, um Interessen einer Person oder ähnliches handeln. Ein Profil kann auch Suchdaten oder Angebotsdaten beinhalten. Suchdaten beinhalten beispielsweise Daten über Gegenstände oder Dienstleistungen, nach denen der Teilnehmer nachfragt. Entsprechend handelt es sich bei Angebotsdaten um solche Daten, über einen Gegenstand oder eine Dienstleistung, die ein Teilnehmer zum Verkauf, zur Miete oder zur Leihe anbietet. Profildaten können auch Informationen darüber beinhalten, welches Ziel ein Teilnehmer zu welcher Zeit mit welchem Transportmittel erreichen möchte.

Aus dem Stand der Technik sind zwei Ansätze zum Clustern, d.h. zum Bilden von (virtuellen) Gruppen jeweils zusammengehöriger Objekte, einer Mehrzahl an Teilnehmern bekannt.

In "Clustering and Routing in Mobile Wireless Networks" von Geng Chen und Ivan Stojmenovic, Technical Report TR-9,9-05, School of Information Technology & Engineering, University of Ottawa, Canada, June 1999, wird ein Verfahren zum Clustern von Teilnehmer im mobilen Umfeld beschrieben. Nach diesem Verfahren wird eine Gruppe von mobilen Teilnehmern, insbesondere Endgeräten, hinsichtlich ihrer geographischen Daten bzw. Position gebildet bzw. geclustert.

In der Veröffentlichung "An Analysis of Recent Work on Clustering Algorithms" von Daniel Fasulo, Technical Report UW-CSE-01-03-02, Computer Sciences Department, Washington University, 26. April 1999, wird ein Verfahren beschrieben, bei dem aus einer Fülle von Daten ähnliche Datensätze ausfindig gemacht werden.

Beide Verfahren sind nicht in der Lage, eine Mehrzahl an Teilnehmern in einem mobilen Ad-hoc-Netzwerk zu clustern, wenn jedem Teilnehmer ein spezifisches Profil mit Daten über ihn zugeordnet ist.

Aus der Schrift WO 03/055149 A1 ist ein Verfahren für mobile ad-hoc-Netzwerke bekannt, bei dem Gruppen mobiler Endgeräte in Abhängigkeit von Attributen gebildet werden, welche die mobilen Endgeräte gemeinsam haben. Für viele Anwendungen ist dieses Verfahren jedoch nicht flexibel genug.

Aus Tseng et al: "Location Awareness in Ad Hoc Wireless Mobile Networks" Computer, IEEE Computer Society, Long Beach, CA, US, Bd. 34, Nr. 6, Juni 2001, S. 46-52, sind Dienste bekannt, die bestimmen, welche Teilnehmer sich in einem geographisch festgelegten Kommunikationsbereich aufhalten.

Die Aufgabe der vorliegenden Erfindung besteht deshalb darin, ein Verfahren anzugeben, dass das flexible Clustern einer Mehrzahl an Teilnehmern in einem mobilen Ad-hoc-Netzwerk erlaubt, wobei das Clustern der Teilnehmer nach deren spezifischen Profilen erfolgen soll.

Diese Aufgabe wird durch das Verfahren, durch die Einrichtung sowie durch das Computerprogramm mit Programmcode-Mitteln und durch das Computerprogramm-Produkt zum Clustern einer Mehrzahl an Teilnehmern in einem mobilen Netzwerk mit den Merkmalen gemäß dem jeweiligen unabhängigen Patentanspruch gelöst.

In dem erfindungsgemäßen Verfahren zum Clustern einer Mehrzahl an Teilnehmern in einem mobilen Netzwerk, wobei jedem Teilnehmer ein spezifisches Profil mit Daten über ihn und mindestens eine Nebenbedingung zugeordnet ist, ist vorgesehen, dass ein unmittelbarer Datenaustausch zwischen zumindest zwei Teilnehmern stattfindet, sobald sich diese in einem vorgegebenen Kommunikationsbereich befinden, um Teilnehmer mit Profilen eines vorgegebenen Inhalts unter Berücksichtigung der Nebenbedingungen in dem vorgegebenen Kommunikationsbereich ausfindig zu machen.

Dem Gedanken der Erfindung nach besitzt jeder Teilnehmer ein Profil mit Eigenschaften des Teilnehmers, welches die Grundlage darstellt, die Teilnehmer in Gruppen (Cluster) einzuteilen (clustern). Gruppenmitglieder haben dabei ähnliche Profile.

Ziel ist es damit, in einer mobilen Ad-hoc-Umgebung diese ähnlichen Profile ausfindig zu machen. Dies kann beispielsweise mittels einer Distanzfunktion oder allgemein mit einer Funktion realisiert werden.

Der Vorteil des Verfahrens besteht darin, dass dieses vollständig dezentral arbeitet, d.h. dass keine zentrale Datenbank benötigt wird. Die Kommunikation zwischen den Teilnehmern läuft damit ohne Zwischenschaltung einer zentralen Vermittlungseinheit ab. Die Kommunikation zwischen zwei Teilnehmern findet lokal statt, wodurch lediglich solche Teilnehmer miteinander kommunizieren können, die sich innerhalb eines bestimmten Kommunikationsradius befinden.

Um nicht lediglich einen Vergleich auf Übereinstimmung durchführen zu können, wird die mindestens eine Nebenbedingung im Rahmen der Auswertung berücksichtigt. Diese Information kann mit einer Ähnlichkeitsfunktion erfasst und verarbeitet werden. Die Wahrscheinlichkeit, dass damit eine Mehrzahl an Teilnehmern mit ähnlichen Profilen innerhalb einer Teilnehmergruppe gefunden wird, steigt dadurch beträchtlich.

Das Computerprogramm mit Programmcode-Mitteln ist eingerichtet, um alle Schritte gemäß dem erfindungsgemäßen Verfahren durchzuführen, wenn das Programm auf einem Computer ausgeführt wird.

Das Computerprogramm-Produkt mit auf einem maschinenlesbaren Träger gespeicherten Programmcode-Mitteln ist eingerichtet, um alle Schritte gemäß dem erfindungsgemäßen Verfahren durchzuführen, wenn das Programm auf einem Computer ausgeführt wird.

Die Einrichtung sowie das Computerprogramm mit Programmcode-Mitteln, eingerichtet um alle Schritte gemäß dem erfinderischen Verfahren durchzuführen, wenn das Programm auf einem Computer ausgeführt wird, sowie das Computerprogramm-Produkt mit auf einem maschinenlesbaren Träger gespeicherten Programmcode-Mitteln, eingerichtet um alle Schritte gemäß dem erfinderischen Verfahren durchzuführen, wenn das Programm auf einem Computer ausgeführt wird, sind insbesondere geeignet zur Durchführung des erfindungsgemäßen Verfahrens oder einer seiner nachfolgend erläuterten Weiterbildungen.

Bevorzugte Weiterbildungen der Erfindung ergeben sich aus den abhängigen Ansprüchen.

Die im weiteren beschriebenen Weiterbildungen beziehen sich sowohl auf die Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem das Computerprogramm mit Programmcode-Mitteln gespeichert ist, welches die Erfindung oder Weiterbildung ausführt.

Auch kann die Erfindung oder jede im weiteren beschriebene Weiterbildung durch ein Computerprogrammerzeugnis realisiert sein, welches ein Speichermedium aufweist, auf welchem das Computerprogramm mit Programmcode-Mitteln gespeichert ist, welches die Erfindung oder Weiterbildung ausführt.

Der Kommunikationsbereich wird in einer Weiterbildung der Erfindung mittels Bildung von zumindest einer Teilnehmergruppe, die je einen Initiator-Teilnehmer und eine Mehrzahl an weiteren Teilnehmern aufweisen, definiert. Dieses Vorgehen ist vor allem dann sinnvoll, wen eine sehr große Anzahl an Teilnehmern in Gruppen unterteilt werden soll. Zweck dieser Vorgehensweise ist es, die Anzahl der denkbaren Kommunikationsteilnehmer auf eine bestimmte Anzahl einzugrenzen. Da die Kommunikation zwischen den Teilnehmern untereinander direkt, also ohne Zwischenschaltung einer zentralen Vermittlungseinheit erfolgt, muss auch das Ausfindigmachen von Teilnehmern mit Profilen eines vorgegebenen Inhalts in dem Kommunikationsbereich durch die Teilnehmer selbst erfolgen. Befinden sich in dem Kommunikationsbereich zu viele Teilnehmer, so wäre der zeitliche und der Rechenaufwand möglicherweise zu groß.

Erfindungsgemäß weist die Teilnehmergruppe eine Ausdehnung auf, die gleich oder größer ist als die Kommunikationsreichweite eines einzelnen Teilnehmers. Dies bedeutet, der Kommunikationsbereich kann eine Fläche oder ein Volumen umfassen, welche bzw. welches über die Kommunikationsreichweite eines einzelnen Teilnehmers hinausgeht.

Eine Kommunikationstopologie, also mögliche Kommunikationswege zwischen den Teilnehmern innerhalb des vorgegebenen Kommunikationsbereiches, wird gemäß einer vorteilhaften Ausgestaltung auf Initiative des Initiator-Teilnehmers innerhalb jeder Teilnehmergruppe gebildet. Ein Initiator-Teilnehmer unterscheidet sich grundsätzlich nicht von den weiteren Teilnehmern der Teilnehmergruppe. Diesem ist es jedoch als einzigen Teilnehmer einer Teilnehmergruppe erlaubt, die erste Kommunikation innerhalb der Teilnehmergruppe zu senden. Dieses Vorgehen ist sinnvoll, um zu vermeiden, dass alle Teilnehmer gleichzeitig und/oder unkoordiniert die Initiierung einer Kommunikation zwischen den Teilnehmern untereinander beginnen.

Die Auswahl eines Initiator-Teilnehmers kann aufgrund eines aktiven Auswahlalgorithmus erfolgen oder aufgrund einer passiven Bestimmungsmethode. Die Verwendung einer passiven Bestimmungsmethode ist dabei die einfachere Vorgehensweise. Hierbei ist jedem Teilnehmer eine Identifikationsnummer (ID) zugeordnet. Initiator-Teilnehmer einer Teilnehmergruppe ist beispielsweise derjenige Teilnehmer, welcher die höchste ID innerhalb der Teilnehmergruppe aufweist.

Es hat sich als vorteilhaft herausgestellt, wenn die Kommunikationstopologie als Baumstruktur, sogenannter "spanning tree", oder als Ringstruktur ausgebildet ist. Grundsätzlich sind natürlich auch andere Topologien möglich, wobei die Auswahl einer Topologie im wesentlichen vom Grad der Mobilität der Teilnehmer abhängt. Ein Ad-hoc-Netzwerk wird grundsätzlich als ungerichteter Graph modelliert. In diesem Graph sind die Teilnehmer durch sogenannte Knoten repräsentiert. Zwischen den Knoten besteht dann eine Verbindung, wenn die Distanz zwischen beiden Knoten geringer als der Kommunikationsradius eines der Teilnehmer ist. Die Graph-Theorie garantiert, dass für jeden Graph eine Struktur, z.B. eine Baumstruktur, existiert.

Es ist vorteilhaft, wenn der Kommunikationspfad nach Maßgabe der festgelegten Kommunikationstopologie über eine festgelegte maximale Anzahl an Teilnehmern erfolgt. Auf diese Weise kann sichergestellt werden, dass der Kommunikationsbereich, welcher mittels Bildung von zumindest einer Teilnehmergruppe erfolgt, hinsichtlich seiner Ausdehnung und damit seiner Teilnehmer begrenzt ist.

In einer weiteren vorteilhaften Ausgestaltung des Verfahrens ist jeder Teilnehmer genau einer Teilnehmergruppe zugeordnet. Während der Bildung der Teilnehmergruppen ist es möglich, dass einzelne oder mehrere der Teilnehmer zunächst mehreren Teilnehmergruppen zuordenbar wären. Die von den Teilnehmergruppen eingenommenen Flächen bzw. Volumina können sich somit überschneiden. Die fraglichen Teilnehmer befinden sich dann innerhalb der Schnittbereiche dieser Flächen bzw. Volumina. Vorzugsweise entscheidet jeder Teilnehmer selbsttätig, zu welcher Teilnehmergruppe er gehört. Die Entscheidung, welcher Teilnehmergruppe sich ein Teilnehmer anschließen möchte, könnte beispielsweise anhand seines Profils und der Profile der benachbarten Teilnehmer jeweiliger Teilnehmergruppen erfolgen.

Vorzugsweise wird die Festlegung der Teilnehmergruppe wiederholt, wenn ein weiterer, bislang nicht zu der Teilnehmergruppe gehöriger Teilnehmer innerhalb des bestimmten Kommunikationsbereichs identifiziert wird. Auf diese Weise kann die Dynamik der Teilnehmer in einem Ad-hoc-Netzwerk berücksichtigt werden.

Um nun nach ähnlichen Profilen zu suchen, kann sich auf diejenigen Profile der Teilnehmer beschränkt werden, die sich innerhalb einer jeweiligen Teilnehmergruppe befinden. Es sei jedoch an dieser Stelle darauf hingewiesen, dass das Festlegen der Teilnehmergruppen und damit das Begrenzen eines Kommunikationsbereiches lediglich zu dem Zweck erfolgt, um die Rechenarbeit jeweiliger Teilnehmer zu reduzieren. Sofern die Teilnehmer über eine ausreichend leistungsfähige Recheneinheit verfügen, ist ggf. das Festlegen einer hinsichtlich der Anzahl seiner Teilnehmer eingeschränkter Teilnehmergruppen nicht notwendig.

Die Überprüfung von Profilen eines vorgegebenen Inhalts umfasst die Auswertung der Profile zumindest zweier Teilnehmer auf Ähnlichkeit oder Übereinstimmung. Dabei wird die Idee der lokalen Kommunikation der Teilnehmer untereinander deutlich. Der Austausch der Profile erfolgt nicht unter Zwischenschaltung einer Vermittlungseinheit, welche ggf. auch einen Vergleich vornimmt, sondern benachbarte bzw. in dem Kommunikationspfad benachbarte Teilnehmer tauschen ihre Profildaten aus und nehmen jeweils einen Vergleich dieser Daten vor.

Vorteilhafterweise legt jeder Teilnehmer zumindest einen Teil seines Profils sowie die mindestens eine Nebenbedingung selbst fest.

Die Profilgruppen des Teilnehmers einer Teilnehmergruppe werden dann zwischen den Teilnehmern zur Auswertung ausgetauscht. Wie bereits beschrieben, erfolgt der Austausch der Daten unmittelbar zwischen jeweiligen Teilnehmern.

Der Austausch der Daten erfolgt vorzugsweise unter Verwendung der ermittelten Kommunikationstopologie. Die Auswertung der Profilgruppen erfolgt, wie bereits beschrieben, durch jeden Teilnehmer. Die Auswertung selbst ist damit ein sukzessiver Prozess, da auch der Datenaustausch zwischen jeweiligen Teilnehmern sukzessive erfolgt.

Sobald ein Teilnehmer die Ähnlichkeit mit einem anderen Teilnehmer festgestellt hat, werden einem Teilnehmer die übrigen Teilnehmer mit Profilen des vorgegebenen Inhalts zur Kenntnis gebracht. Diese Information kann auf einem Endgerät optisch über ein Display oder akustisch, z.B. durch eine Sprachmitteilung, erfolgen.

Die erfindungsgemäße Einrichtung zum Clustern einer Mehrzahl von Teilnehmern in mobilen Netzwerken, wobei jedem Teilnehmer jeweils ein spezifisches Profil mit Profildaten zugeordnet ist, ist derart ausgeartet, dass ein Datenaustausch zwischen zumindest zwei Teilnehmern stattfindet, sobald sich diese in einem vorgegebenen Kommunikationsbereich befinden, um Teilnehmer mit Profilen eines vorgegebenen Inhalts in den vorgegebenen Kommunikationsbereich ausfindig zu machen. Bei der erfindungsgemäßen Einrichtung handelt es sich letztendlich um ein Endgerät, wie beispielsweise ein Mobilfunktelefon, einen Pocket-PC, einen portablen Computer oder eine Beförderungseinrichtung, wie z.B. ein Auto, ein Kabinenfahrzeug oder ein Schienenfahrzeug, welches in der Lage ist "peer-to-peer" zu kommunizieren.

Die Einrichtung verfügt vorzugsweise über eine Schnittstelle zur drahtlosen Datenübertragung. Die Übertragung kann beispielsweise mittels Wireless-LAN (WLAN) oder Bluetooth erfolgen. Jeder Teilnehmer verfügt über eine Recheneinheit zum Vergleich des eigenen Profils bzw. der eigenen Profilgruppe mit dem Profil bzw. der Profilgruppe eines anderen Teilnehmers. Die Einrichtung ist derart ausgestaltet, dass ein direkter Datenaustausch (peer-to-peer) zwischen jeweils zwei Teilnehmern möglich ist.

Weitere Vorteile, Merkmale und Einzelheiten der Erfindung werden nachfolgend anhand der Figuren näher beschrieben. Es zeigen:
- Figur 1: eine Vielzahl an Teilnehmern und deren Zuordnung zu einer Teilnehmergruppe,
- Figur 2: die Darstellung der Teilnehmer in einem Graph- und eine mögliche Baumstruktur und
- Figur 3: eine schematische Darstellung des Verfahrens zum Clustern einer Mehrzahl an Teilnehmern in einem mobilen Ad-hoc-Netzwerk.

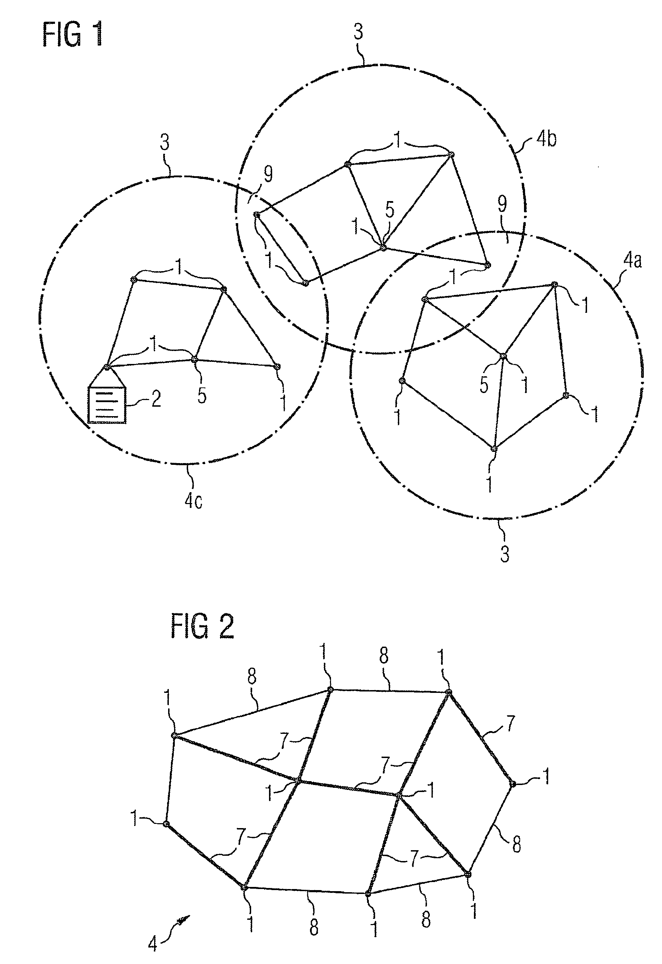

Figur 1 zeigt schematisch das erfindungsgemäße Verfahren zum Clustern einer Mehrzahl an Teilnehmern 1. Sämtliche Teilnehmer 1 befinden sich an einem hochfrequentierten Ort, wie beispielsweise einem Sportstadion oder einem Marktplatz. Jeder Teilnehmer verfügt über ein Endgerät, über das er Daten austauschen und empfangen kann. Das Endgerät kann beispielsweise ein Mobilfunktelefon sein. Um das Clustern der Vielzahl der Teilnehmer 1 zu erleichtern, wird die Gesamtheit der Teilnehmer 1 in sog. Teilnehmergruppen 4 unterteilt. In Figur 1 sind insgesamt drei Teilnehmergruppen 4 (4a, 4b, 4c) dargestellt. Das Aufteilen in Teilnehmergruppen dient nahezu, die Anzahl der Kommunikationsteilnehmer - innerhalb einer Teilnehmergruppe - zu reduzieren.

Hierzu wird zunächst innerhalb jeder Teilnehmergruppe ein Initiator-Teilnehmer 5 bestimmt. Der Initiator-Teilnehmer innerhalb einer Teilnehmergruppe 4 ist z.B. derjenige Teilnehmer, welcher die höchste Identifikationsnummer (ID) innerhalb dieser Teilnehmergruppe 4 aufweist. Der Initiator-Teilnehmer 5 beginnt mit dem Aufbau einer Kommunikation mit den benachbarten Teilnehmern 1 innerhalb der Teilnehmergruppe 4.

Für die Durchführung des Verfahrens ist der Initiator-Teilnehmer nicht zwingend notwendig. Dieser ist vor allem dann sinnvoll, wenn die Gruppierung zu Teilnehmergruppen von vielen Teilnehmern gleichzeitig initiiert wird. Für den Fall, dass eine Teilnehmergruppe durch sukzessives Eintreten (und natürlich auch Austreten) in einen Kommunikationsbereich gebildet wird, ist der Initiator-Teilnehmer nicht notwendig.

Die Kommunikation erfolgt dabei vorzugsweise über einen Kommunikationspfad bzw. eine Kommunikationstopologie. Hierzu bedient man sich eines Graphen-Modells, nach dem eine Kommunikation zwischen zwei Teilnehmern möglich ist, wenn der Abstand zwischen diesen geringer als die Kommunikationsreichweite eines Teilnehmers ist. Ein beispielhafter Graph mit möglichen Kommunikationspfaden 8 und tatsächlichen Kommunikationspfaden 7 ist in Figur 2 dargestellt. Die Ausdehnungen einer Teilnehmergruppe und damit des Kommunikationsbereiches 3 werden durch die Festlegung bestimmt, über maximal wie viele Teilnehmer eine Kommunikation verlaufen darf. Je höher diese Anzahl festgelegt wird, desto weiter erstrecken sich die Kommunikationsbereiche 3, d.h. umso mehr potentielle Teilnehmer kann eine Teilnehmergruppe 4 umfassen.

Aus Figur 1 ist nun auch ersichtlich, dass sich Kommunikationsbereiche 3 überschneiden können. Die Schnittbereiche zweier Kommunikationsbereiche sind mit dem Bezugszeichen 9 gekennzeichnet. In einem solchen Schnittbereich 9 können auch Teilnehmer 1 zum Liegen kommen. Diese könnten damit den, den Schnittbereich 9 definierenden, Kommunikationsbereichen 3 angehören. Zur Durchführung des Verfahrens ist es jedoch notwendig, dass jeder Teilnehmer 1 zu genau einer Teilnehmergruppe 4 gehörig ist. Die Entscheidung, zu welcher Teilnehmergruppe 4 ein Teilnehmer 1 gehört, trifft dieser selbsttätig. Dies kann beispielsweise aufgrund eines Vergleichs seines Profils mit den Profilen benachbarter Teilnehmer erfolgen, mit denen eine unmittelbare Kommunikation möglich ist. Durch diese Vorauswahl, die mittels einer direkten Kommunikation zwischen den Teilnehmern erfolgt, können diejenigen, die in einem Schnittbereich 9 gelegen sind, die Zugehörigkeit zu einer Teilnehmergruppe definieren.

Um nun Teilnehmer mit ähnlichen Profilen , die z.B. in Form von Funktionen vorliegen, ausfindig zu machen, werden weiter lediglich die Teilnehmer 1 innerhalb einer Teilnehmergruppe 4 betrachtet. In Figur 1 sind insgesamt drei Teilnehmergruppen 4a, 4b, 4c dargestellt. Der nachfolgend beschriebene Prozess wird damit jeweils innerhalb der nun endgültig festgelegten Teilnehmergruppen 4a, 4b, 4c durchgeführt.

Um Teilnehmer mit ähnlichen Profilen zu finden, werden zwei Schritte durchgeführt. Im ersten Schritt legt jeder Teilnehmer für sich fest, welche Nebenbedingung oder Nebenbedingungen neben seinem Profil berücksichtigt werden müssen. Im zweiten Schritt werden die Profile zwischen Teilnehmern einer Teilnehmergruppe 4 ausgetauscht. Sukzessive werden damit das Profil eines Teilnehmers mit den Profilen der anderen Teilnehmer kombiniert. Dieser Vorgang wird separat auf jedem Teilnehmer bzw. in jedem Endgerät eines Teilnehmers durchgeführt, damit sichergestellt ist, dass sämtliche Teilnehmer am Ende dieses Prozesses über die gleichen Informationen verfügen. Das Ergebnis des Vergleichs kann schließlich akustisch oder optisch mitgeteilt werden.

Das erfindungsgemäße Verfahren bietet sich insbesondere in einem Szenario an, bei dem Fahrgäste im öffentlichen Personennahverkehr hinsichtlich ihres Fahrzieles gruppiert werden sollen. Der öffentliche Personennahverkehr in Ballungszentren ist an einen festen Fahrplan und an ein fest vorgegebenes Streckennetz gebunden. Dies bedeutet, Transportmittel, wie z.B. Busse fahren zu fest vorgegebenen Zeitpunkten eine in der Regel nicht änderbare Strecke ab. Bei letzteren hat der Fahrgast keine Möglichkeit, auf die Abfahrtszeiten oder die Strecke des Transportmittels Einfluss zu nehmen.

Manche Verkehrsbetriebe bieten, vor allem in dünn besiedelten Gebieten oder zu nächtlichen Stunden, sog. Rufbusse oder Ruftaxen an. Zu deren Nutzung muss sich der Fahrgast frühzeitig (ca. 1 Stunde vor Abfahrt) an einer zentralen Stelle, z.B. einer Telefonzentrale oder einer an das Internet angeschlossenen Datenbank, anmelden.

Dieses bedarfsgesteuerte Verkehrssystem ist jedoch nicht ohne weiteres auf hochfrequentierte Orte, wie z.B. einem Sportstadion, möglich. Das erfindungsgemäße Verfahren ermöglicht nun das Gruppieren von Fahrgästen hinsichtlich ihres Fahrzieles und ihrer Fahrtzeit. Möglich wird dies dadurch, dass jeder potentielle Fahrgast mit einem mobilen Endgerät, z.B. einem Mobilfunktelefon, einem Pocket-PC oder einem mobilen Computer, ausgestattet ist. Diese Einheit von Fahrgast und mobilem Endgerät entspricht dem eingangs genannten Teilnehmer. Jedes der mobilen Endgeräte ist mit einer Schnittstelle (z.B. WLAN oder Bluetooth) versehen, um eine direkte Kommunikation mit anderen Endgeräten zu ermöglichen.

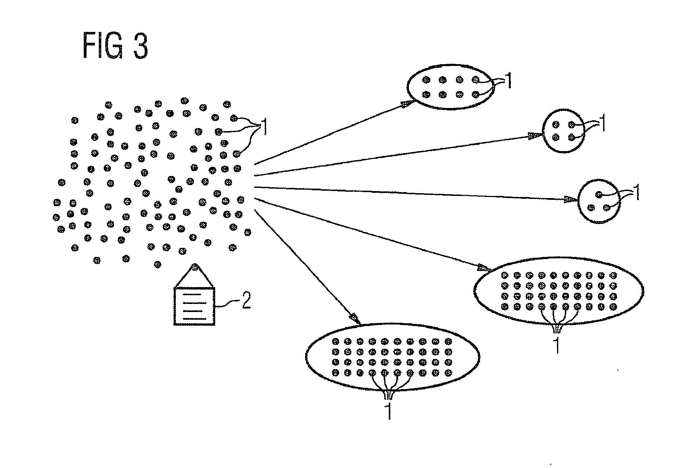

Figur 3 zeigt eine Vielzahl an solchen Teilnehmern 1, welche jeweils mit einem Endgerät ausgestattet sind, auf dem sich jeweils ein Profil 2 befindet. Neben den Daten über den Fahrgast, z.B. seinem Wohnort, sind dort weitere Einträge über ihn vorhanden, die Auskunft über sein Fahrverhalten und bevorzugte Verkehrsmittel beinhalten. Diese Informationen geben beispielsweise Auskunft darüber, wann die Person wohin fahren möchte und welches ihr bevorzugtes Transportmittel ist.

An hochfrequentierten Orten, wie z.B. Sportstadien, Marktplätzen oder Biergärten ist es mit Hilfe des mobilen Endgerätes möglich, Personen anhand ihres auf ihrem Endgerät gespeicherten Profils zu gruppieren. Eine Gruppe zeichnet sich im vorliegenden Ausführungsbeispiel dadurch aus, dass sie ein gemeinsames Transportmittel zur gleichen Zeit in etwa zum gleichen Ziel benutzen möchten.

So sind beispielsweise in Figur 3 fünf Gruppen gebildet, wovon die erste Gruppe (oben) mit insgesamt acht Teilnehmern 1 beispielsweise ein Großtaxi zur Zeit X1 an den Ort Y1 benutzt. Eine weitere Gruppe (zweite von oben), bestehend aus vier Teilnehmern 1 benutzt zur Zeit X2 ein Taxi an den Ort Y2. In entsprechender Weise haben sich weitere Gruppen gefunden, deren Teilnehmer 1 jeweils das gleiche Fahrtziel haben.

Da sich die jeweiligen Gruppen spontan finden, kann auf einen festen Zeitplan verzichtet werden. Möglich wird dies dadurch, dass in den Profilen der Teilnehmer Angaben über die bevorzugte Abfahrtszeit enthalten sind. Nach Bildung jeweiliger Gruppen werden entsprechende Transportmittel - je nach Größe der Gruppe - geordert. Die Haltestellen können nun gemäß den Wünschen der Fahrgäste dynamisch festgelegt werden.

Die Tatsache, dass sich verschiedene Fahrgäste zu einer Gruppe zusammenschließen, bedeutet nicht notwendigerweise, dass diese das identische Fahrziel ansteuern möchten. Da jeder Teilnehmer neben seinem exakten Profil auch Nebenbedingungen in seinem Endgerät speichert, welche er als ähnlich (z.B. ergänzend oder einschränkend) zu seinem Grundprofil betrachtet, finden sich innerhalb einer Gruppe nun solche Teilnehmer bzw. Fahrgäste, die ein ähnliches, z.B. auf einer Strecke gelegenes Fahrtziel haben.

So kann der Teilnehmer als Nebenbedingung angeben, dass er einen Umweg von bis zu 10 km zu fahren bereit ist, dass er Mehrkosten von bis zu 15 % zu tragen bereit ist, oder dass er eine Fahrzeitverlängerung von bis zu 20 Minuten in Kauf nehmen kann. Diese Kriterien werden ausschließend bei der Gruppenbildung berücksichtigt.

Durch die Einführung des oben beschriebenen Verfahrens entstehen sowohl für einen Fahrgast als auch für einen Betreiber der Transportmittel Vorteile. Aufgrund der profilbasierten Bestimmung werden die Fahrgäste schneller und bedarfsgerechter an ihr gewünschtes Ziel transportiert. Durch das gezielte Finden von Gruppen für die Transportmittel wird außerdem die Wartezeit für die Fahrgäste dieses Transportmittels reduziert. Durch die Verwendung der lokalen Kommunikationsschnittstelle entstehen dem Nutzer auch keine zusätzlichen Kosten. Seitens der Betreiber der Transportmittel sind durch Umsetzung des obigen Systems Einsparungen möglich. So lassen sich die Transportmittel entsprechend der Nachfrage dimensionieren. Dies führt zu einer verbesserten Auslastung. Andererseits lassen sich Betriebskosten, z.B. Treibstoffkosten, aufgrund einer optimierten Route reduzieren. Schließlich ist das Transportmittel schneller für einen erneuten Einsatz bereit.

Das erfindungsgemäße Verfahren lässt sich ebenfalls zum Gruppieren von Besuchern eines Museums zwecks einer optimalen Zusammensetzung einer Gruppe für eine Museumsführung einsetzen. In Museen, Schlössern oder sonstigen kulturellen Einrichtungen werden Führungen angeboten, in denen eine geschulte Person über die Hintergründe der Ausstellungsexponate berichtet. Diese Erläuterungen sind jedoch nicht oder nur bedingt auf einen Zuhörerkreis angepasst. Durch das profilbasierte Clustern von Teilnehmern, welche ebenfalls durch eine Person mit einem mobilen Endgerät repräsentiert sind, ist es möglich, Museumsbesucher, z.B. nach deren Interessen zu gruppieren und auf diese Weise Führungen besser auf die Teilnehmer abzustimmen. Hierdurch kann die Qualität der Führungen verbessert werden.

## Patentansprüche

1. Verfahren zum Clustern einer Mehrzahl an Teilnehmern (1) in einem mobilen Netzwerk, wobei jedem Teilnehmer (1) ein spezifisches Profil (2) mit Daten über ihn zugeordnet ist,
**dadurch gekennzeichnet, dass**
ein unmittelbarer Datenaustausch zwischen zumindest zwei Teilnehmern (1) stattfindet, sobald sich diese in einem vorgegebenen Kommunikationsbereich (3) befinden, um Teilnehmer (1) mit Profilen (2) eines vorgegebenen Inhalts in dem vorgegebenen Kommunikationsbereich (3) ausfindig zu machen, und der Kommunikationsbereich (3) mittels Bildung von zumindest einer Teilnehmergruppe (4a,4b,4c), die je einen Initiator-Teilnehmer (5) und eine Mehrzahl an Teilnehmern (1) aufweisen, definiert ist.

2. Verfahren nach Anspruch 1,
**dadurch gekennzeichnet, dass**
eine Teilnehmergruppe (4a,4b,4c) eine Ausdehnung aufweist, die gleich oder größer ist als die Kommunikationsreichweite (6) eines einzelnen Teilnehmers (1).

3. Verfahren nach Anspruch 1 oder 2,
**dadurch gekennzeichnet, dass**
auf Initiative des Initiator-Teilnehmers (5) eine Kommunikationstopologie innerhalb jeder Teilnehmergruppe (4a,4b,4c) gebildet wird.

4. Verfahren nach Anspruch 3,
**dadurch gekennzeichnet, dass**
die Kommunikationstopologie als Baum- oder Ringstruktur ausgebildet ist.

5. Verfahren nach einem der Ansprüche 1 bis 4,
**dadurch gekennzeichnet, dass**
der Kommunikationspfad (7) nach Maßgabe der festgelegten Kommunikationstopologie über eine festgelegte maximale Anzahl an Teilnehmern (1) erfolgt.

6. Verfahren nach einem der Ansprüche 1 bis 5,
**dadurch gekennzeichnet, dass**
jeder Teilnehmer (1) genau einer Teilnehmergruppe (4a,4b,4c) zugeordnet ist.

7. Verfahren nach Anspruch 6,
**dadurch gekennzeichnet, dass**
jeder Teilnehmer (1) selbsttätig entscheidet, zu welcher Teilnehmergruppe (4a,4b,4c) er gehört.

8. Verfahren nach einem der Ansprüche 1 bis 7,
**dadurch gekennzeichnet, dass**
die Festlegung der Teilnehmergruppe (4a,4b,4c) wiederholt wird, wenn ein weiterer, bislang nicht zu der Teilnehmergruppe (4a,4b,4c) gehöriger Teilnehmer (1) innerhalb des bestimmten Kommunikationsbereichs (3) identifiziert wird.

9. Verfahren nach einem der vorhergehenden Ansprüche,
**dadurch gekennzeichnet, dass**
die Überprüfung von Profilen (2) eines vorgegebenen Inhalts die Auswertung der Profile zumindest zweier Teilnehmer (1) auf Ähnlichkeit oder Übereinstimmung umfasst.

10. Verfahren nach einem der vorhergehenden Ansprüche,
**dadurch gekennzeichnet, dass**
jeder Teilnehmer (1) neben seinem Profil zumindest eine Nebenbedingung festlegt, die im Rahmen der Auswertung berücksichtigt wird.

11. Verfahren nach einem der vorhergehenden Ansprüche,
**dadurch gekennzeichnet, dass**
die Profilgruppen jedes Teilnehmers (1) einer Teilnehmergruppe (4a,4b,4c) zwischen den Teilnehmern zur Auswertung ausgetauscht werden.

12. Verfahren nach Anspruch 11,
**dadurch gekennzeichnet, dass**
der Austausch zwischen jeweils zwei Teilnehmern (1) erfolgt.

13. Verfahren nach Anspruch 11 oder 12,
**dadurch gekennzeichnet, dass**
der Austausch unter Verwendung der ermittelten Kommunikationstopologie erfolgt.

14. Verfahren nach einem der Ansprüche 10 bis 13,
**dadurch gekennzeichnet, dass**
die Auswertung der Profilgruppen durch jeden Teilnehmer (1) erfolgt.

15. Verfahren nach einem der vorhergehenden Ansprüche,
**dadurch gekennzeichnet, dass**
die Kommunikation zwischen den Teilnehmern (1) ohne Zwischenschaltung einer zentralen Vermittlungseinheit abläuft.

16. Verfahren nach einem der vorhergehenden Ansprüche,
**dadurch gekennzeichnet, dass**
einem Teilnehmer (1) die übrigen Teilnehmer mit Profilen des vorgegebenen Inhalts zur Kenntnis gebracht werden.

17. Einrichtung zum Clustern einer Mehrzahl von Teilnehmern (1) in mobilen Netzwerken,
- mit Mitteln zur Zuordnung von jeweils einem spezifischen Profil (2) mit Profildaten zu jedem Teilnehmer (1),
**gekennzeichnet durch**
- Mittel zum Datenaustausch zwischen zumindest zwei Teilnehmern (1), sobald sich diese in einem vorgegebenen Kommunikationsbereich (3) befinden, um Teilnehmer (1) mit Profilen (2) eines vorgegebenen Inhalts in dem vorgegebenen Kommunikationsbereich (3) ausfindig zu machen,
- Mittel zur Definition des Kommunikationsbereichs (3) mittels Bildung von zumindest einer Teilnehmergruppe (4a,4b,4c), die je einen Initiator-Teilnehmer (5) und eine Mehrzahl an Teilnehmern (1) aufweisen.

18. Einrichtung nach Anspruch 17,
**dadurch gekennzeichnet, dass**
diese über eine Schnittstelle zur drahtlosen Datenübertragung verfügt.

19. Einrichtung nach Anspruch 17 oder 18,
**gekennzeichnet durch**
Mittel zum direkten Datenaustausch zwischen jeweils zwei Teilnehmern (1).

20. Einrichtung nach einem der Ansprüche 17 bis 19,
**dadurch gekennzeichnet, dass**
diese ein mobiles Telekommunikationsendgerät, ein Pocket-PC, ein portabler Computer oder eine Beförderungseinrichtung ist.

21. Einrichtung nach einem der Ansprüche 17 bis 20,
**dadurch gekennzeichnet, dass**
diese über eine Recheneinheit zum Vergleich des eigenen Profils bzw. der eigenen Profilgruppe mit dem Profil oder bzw. der Profilgruppe eines anderen Teilnehmers verfügt.

22. Computerprogramm mit Programmcode-Mitteln, um alle Schritte gemäß Anspruch 1 durchzuführen, wenn das Programm auf einem Computer ausgeführt wird.

23. Computerprogramm mit Programmcode-Mitteln gemäß Anspruch 22,
**dadurch gekennzeichnet, dass**
das Computerprogramm auf einem computerlesbaren Datenträger gespeichert ist.

24. Computerprogramm-Produkt mit auf einem maschinenlesbaren Träger gespeicherten Programmcode-Mitteln, um alle Schritte gemäß Anspruch 1 durchzuführen, wenn das Programm auf einem Computer ausgeführt wird.

## Claims

1. Method for clustering a plurality of users (1) in a mobile network, wherein each user (1) is assigned a specific profile (2) containing data about said user,
**characterised in that** a direct data interchange takes place between at least two users (1) as soon as they are in a specified communication zone (3), in order to find users (1) with profiles (2) of a specified content in the specified communication zone (3), and the communication zone (3) is defined by forming at least one user cluster (4a,4b,4c) having an initiator user (5) and a plurality of users (1) in each case.

2. Method according to claim 1,
**characterised in that** a user cluster (4a,4b,4c) has an extent that is equal to or greater than the communication range (6) of an individual user (1).

3. Method according to claim 1 or 2,
**characterised in that,** at the instigation of the initiator user (5), a communication topology is formed within each user cluster (4a,4b,4c).

4. Method according to claim 3,
**characterised in that** the communication topology is formed as a tree or ring structure.

5. Method according to one of claims 1 to 4,
**characterized in that** the communication path (7) is via a defined maximum number of users (1) in accordance with the defined communication topology.

6. Method according to one of claims 1 to 5, **characterised in that** each user (1) is assigned to a single user cluster (4a,4b,4c).

7. Method according to claim 6,
**characterised in that** each user (1) decides autonomously which user cluster (4a,4b,4c) he belongs to.

8. Method according to one of claims 1 to 7,
**characterised in that** the user cluster (4a,4b,4c) is redefined if another user (1) not hitherto belonging to the user cluster (4a,4b,4c) is identified within the particular communication zone (3).

9. Method according to one of the preceding claims,
**characterised in that** the checking of profiles (2) of a specified content includes analysing the profiles of at least two users (1) for similarity or identicalness.

10. Method according to one of the preceding claims,
**characterised in that** each user (1) defines, in addition to his profile, at least one constraint which is taken into account as part of the analysis.

11. Method according to one of the preceding claims,
**characterised in that** the profile groups of each user (1) within a user cluster (4a,4b,4c) are interchanged between the users for analysis.

12. Method according to claim 11,
**characterised in that** data is interchanged between two users (1) in each case.

13. Method according to claim 11 or 12,
**characterized in that** data is interchanged using the communication topology determined.

14. Method according to one of claims 10 to 13,
**characterised in that** the profile groups are analysed by each user (1).

15. Method according to one of the preceding claims, **characterised in that** communication between the users (1) takes place without the interposition of a central switching entity.

16. Method according to one of the preceding claims, **characterised in that** a user (1) is made aware of the other users with profiles of the specified content.

17. Device for clustering a plurality of users (1) in mobile networks,
- with means for assigning a specific profile (2) containing profile data to each user (1),
**characterised by**
- means for data interchange between at least two users (1) as soon as they are in a specified communication zone (3), in order to find users (1) with profiles (2) of a specified content in the specified communication zone (3),
- means for defining the communication zone (3) by forming at least one user cluster (4a,4b,4c) having an initiator user (5) and a plurality of users (1) in each case.

18. Device according to claim 17,
**characterised in that** it has an interface for wireless data transfer.

19. Device according to claim 17 or 18,
**characterised by** means for direct data interchange between two users (1) in each case.

20. Device according to one of claims 17 to 19,
**characterised in that** it is a mobile telecommunication terminal, a pocket PC, a portable computer or a means of transportation.

21. Device according to one of claims 17 to 20,
**characterised in that** it has a computing unit for comparing its own profile or profile group with the profile or profile group of another user.

22. Computer program with program coding means in order to perform all steps according to claim 1 if the program is run on a computer.

23. Computer program with program coding means according to claim 22,
**characterised in that** the computer program is stored on a computer-readable data medium.

24. Computer program product with program coding means stored on a machine-readable medium, in order to perform all steps according to claim 1 if the program is run on a computer.

## Revendications

1. Procédé pour grouper une pluralité d'usagers (1) dans un réseau mobile, à chaque usager (1) étant associé un profil spécifique (2) avec des données correspondantes, **caractérisé en ce qu'**a lieu un échange de données direct entre au moins deux usagers (1) dès que ceux-ci se trouvent dans une zone de communication prédéterminée (3) pour trouver des usagers (1) avec des profils (2) ayant un contenu prédéterminé dans la zone de communication prédéterminée (3) et la zone de communication (3) étant définie au moyen de la formation d'au moins un groupe d'usagers (4a, 4b, 4c) comportant chacun un usager initiateur (5) et une pluralité d'usagers (1).

2. Procédé selon la revendication 1, **caractérisé en ce qu'**un groupe d'usagers (4a, 4b, 4c) présente une étendue égale ou supérieure à la portée de communication (6) d'un usager isolé (1).

3. Procédé selon la revendication 1 ou 2, **caractérisé en ce que,** sur l'initiative de l'usager initiateur (5), une topologie de communication est constituée au sein de chaque groupe d'usagers (4a, 4b, 4c).

4. Procédé selon la revendication 3, **caractérisé en ce que** la topologie de communication se présente sous la forme d'une structure arborescente ou annulaire.

5. Procédé selon l'une des revendications 1 à 4, **caractérisé en ce que** le chemin de communication (7) résulte grâce à d'un nombre maximal déterminé d'usagers (1) conformément à la topologie de communication déterminée.

6. Procédé selon l'une des revendications 1 à 5, **caractérisé en ce que** chaque usager (1) est associé à exactement un groupe d'usagers (4a, 4b, 4c).

7. Procédé selon la revendication 6, **caractérisé en ce que** chaque usager (1) décide par lui-même à quel groupe d'usagers (4a, 4b, 4c) il appartient.

8. Procédé selon l'une des revendications 1 à 7, **caractérisé en ce que** la détermination du groupe d'usagers (4a, 4b, 4c) est répétée lorsqu'un autre usager (1) ne faisant jusqu'à présent pas partie du groupe d'usagers (4a, 4b, 4c) est identifié au sein de la zone de communication déterminée (3).

9. Procédé selon l'une des revendications précédentes, **caractérisé en ce que** le contrôle de profils (2) ayant un contenu prédéterminé inclut l'évaluation des profils d'au moins deux usagers (1) quant à leur similitude ou leur identité.

10. Procédé selon l'une des revendications précédentes, **caractérisé en ce que** chaque usager (1), outre son profil, détermine au moins une condition secondaire qui est prise en compte dans le cadre de l'évaluation.

11. Procédé selon l'une des revendications précédentes, **caractérisé en ce que** les groupes de profils de chaque usager (1) d'un groupe d'usagers (4a, 4b, 4c) sont échangés entre les usagers aux fins de l'évaluation.

12. Procédé selon la revendication 11, **caractérisé en ce que** l'échange se produit entre respectivement deux usagers (1).

13. Procédé selon la revendication 11 ou 12, **caractérisé en ce que** l'échange se produit moyennant l'utilisation de la topologie de communication déterminée.

14. Procédé selon l'une des revendications 10 à 13, **caractérisé en ce que** l'évaluation des groupes de profils est effectuée par chaque usager (1).

15. Procédé selon l'une des revendications précédentes, **caractérisé en ce que** la communication entre les usagers (1) se déroule sans l'intercalation d'une unité centrale de commutation.

16. Procédé selon l'une des revendications précédentes, **caractérisé en ce qu'**un usager (1) est informé des autres usagers avec des profils ayant le contenu prédéterminé.

17. Dispositif pour grouper une pluralité d'usagers (1) dans des réseaux mobiles,
- avec des moyens pour associer à chaque usager (1) respectivement un profil spécifique (2) avec des données de profil,
**caractérisé par**
- des moyens permettant un échange de données entre au moins deux usagers (1) dès que ceux-ci se trouvent dans une zone de communication prédéterminée (3) pour trouver des usagers (1) avec des profils (2) ayant un contenu prédéterminé dans la zone de communication prédéterminée (3),
- des moyens pour définir la zone de communication (3) par formation d'au moins un groupe d'usagers (4a, 4b, 4c) comportant chacun un usager initiateur (5) et une pluralité d'usagers (1).

18. Dispositif selon la revendication 17, **caractérisé en ce que** celui-ci dispose d'une interface aux fins de la transmission de données sans fil.

19. Dispositif selon la revendication 17 ou 18, **caractérisé par** des moyens permettant un échange direct de données entre respectivement deux usagers (1).

20. Dispositif selon l'une des revendications 17 à 19, **caractérisé en ce que** celui-ci est un terminal de télécommunication mobile, un ordinateur de poche, un ordinateur portable ou un dispositif de transport.

21. Dispositif selon l'une des revendications 17 à 20, **caractérisé en ce que** celui-ci dispose d'une unité de calcul pour comparer son propre profil ou son propre groupe de profils avec le profil ou le groupe de profils d'un autre usager.

22. Programme informatique comportant des moyens de code de programme pour exécuter toutes les étapes selon la revendication 1 lorsque le programme tourne sur un ordinateur.

23. Programme informatique comportant des moyens de code de programme selon la revendication 22, **caractérisé en ce que** le programme informatique est stocké sur un support de données lisible par ordinateur.

24. Produit de programme informatique comportant des moyens de code de programme stockés sur un support lisible par machine pour exécuter toutes les étapes selon la revendication 1 lorsque le programme tourne sur un ordinateur.
